# EUROPÄISCHE PATENTSCHRIFT

(11) **EP 2 496 586 B1**
(45) Veröffentlichungstag und Bekanntmachung des Hinweises auf die Patenterteilung: **18.12.2013**
(21) Anmeldenummer: 10763324.0
(22) Anmeldetag: 08.10.2010
(51) Int. Cl.: C07F 9/10, C07F 9/22

(54) **SYNTHESE VON PHOSPHORESTERN**
SYNTHESIS OF PHOSPHORIC ESTERS
SYNTHÈSE D'ESTERS PHOSPHORIQUES

(30) Priorität: 05.11.2009 DE 102009052034
(43) Veröffentlichungstag der Anmeldung: 12.09.2012
(73) Patentinhaber: Merck Patent GmbH, 64293 Darmstadt (DE)
(72) Erfinder: GLUESENKAMP, Karl-Heinz, 45239 Essen (DE)
(86) Internationale Anmeldenummer: PCT/EP2010/006158
(87) Internationale Veröffentlichungsnummer: WO 2011/054429

(56) Entgegenhaltungen:
- EP-A1- 0 486 100

## Beschreibung

Die vorliegende Erfindung betrifft ein Verfahren zur Herstellung von Phosphorestern, sowie ausgewählte Verbindungen.

Der Synthesebaustein syn-Glycero-3-Phosphocholin (GPC) ist ein wichtiger *Precursor* für die Synthese enantiomeren-reiner Phospholipide:

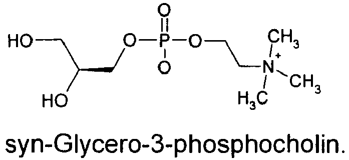

So stellt GPC beispielsweise eine wichtige Zwischenstufe für die Synthese pharmazeutisch relevanter Lipide und Lipoide dar. Außerdem wird diese Substanz als Medikament zur Behandlung von Alzheimer Patienten eingesetzt, da GPC offenbar einen normalisierenden Effekt auf verletztes Nervengewebe ausübt.

Totalsynthesen von GPC sind bekannt. In WO 2007/145476 wird ein Verfahren zur Herstellung von GPC mithilfe einer Reaktion von Phosphocholinchlorid mit R-(+)-Glycidol beschrieben. EP 0486100 A1 offenbart ein Verfahren zur Herstellung von GPC, in dem zunächst Isopropyliden-Glycerol mit 2-Chloro-2-oxa-3,3,2-Dioxophospholan reagiert. Nach der Reaktion mit Trimethylamin und Hydrolyse des erhaltenen Produkts wird GPC erhalten.

Trotz dieser bekannten Syntheseverfahren wird GPC üblicherweise aus Sojabohnen/Hühnerei Lecithinen im großen Maßstab gewonnen. Offenbar ist die Isolierung aus natürlichen Quellen kostengünstiger als die bekannten totalsynthetischen Varianten.

Aufgabe der vorliegenden Erfindung ist daher die Bereitstellung einer alternativen Synthesemethode zur Herstellung von Phosphorestern.

Gegenstand der vorliegenden Erfindung ist daher ein Verfahren zur Herstellung einer Verbindung der Formel I 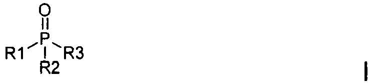 wobei R1, R2, R3 jeweils unabhängig voneinander stehen für
a) Heteroaromaten der Formel II 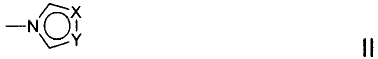 wobei (-X-Y-) steht für
   - -CH-CH-CH-,
   - -Z-CH-CH-,
   - -CH-Z-CH-,
   - -CH-CH-Z-,
   - -CH-Z-,
   - -Z-CH- oder
   - -Z-Z-,
   wobei Z jeweils unabhängig voneinander so aus der Gruppe O, S, N, NH ausgewählt werden, dass sich ein aromatisches System ergibt,
b) -OR4, wobei R4 steht für ein geradkettiges oder verzweigtes Alkyl mit 1-20 C-Atomen, ein geradkettiges oder verzweigtes Alkenyl mit 2-20 C-Atomen und einer oder mehreren Doppelbindungen, ein geradkettiges oder verzweigtes Alkinyl mit 2-20 C-Atomen und einer oder mehreren Dreifachbindungen, ein gesättigtes, teilweise oder vollständig ungesättigtes Cycloalkyl mit 3-24 C-Atomen, das mit Alkylgruppen mit 1-6 C-Atomen substituiert sein kann,
   wobei R4 mit Substituenten wie -OR¹, -NR¹₂, -CN, -C(O)NR¹₂, - COOR¹, -C(=O)R¹, -SO₂NR¹₂ oder Aromaten substituiert sein kann, die gegebenenfalls mit üblichen Schutzgruppen versehen sind und in dem ein oder mehrere C-Atome durch Heteroatome ersetzt sein können, worin R¹ für H, C₁- bis C₆-Alkyl, C₃- bis C₇-Cycloalkyl, unsubstituiertes oder substituiertes Phenyl steht,
c) -O⁻,
dadurch gekennzeichnet, dass in einem ersten Schritt Phosphoroxychlorid mit einem N-haltigen Heteroaromaten umgesetzt wird und in nachfolgenden Schritten die Heteroaromaten gegebenenfalls zumindest teilweise durch Verbindungen mit OH-Funktionen substituiert werden.

Bevorzugt ist ein Verfahren wobei die Verbindung der Formel I ausgewählt ist aus den Formeln Ia, Ib, Ic, Id und le 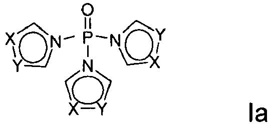 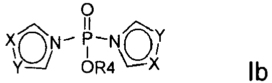 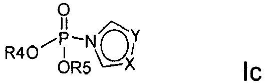 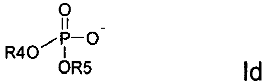 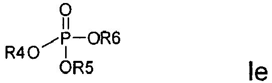 wobei R5 und R6 jeweils unabhängig voneinander und unabhängig von R4 stehen für ein geradkettiges oder verzweigtes Alkyl mit 1-20 C-Atomen, ein geradkettiges oder verzweigtes Alkenyl mit 2-20 C-Atomen und einer oder mehreren Doppelbindungen, ein geradkettiges oder verzweigtes Alkinyl mit 2-20 C-Atomen und einer oder mehreren Dreifachbindungen, ein gesättigtes, teilweise oder vollständig ungesättigtes Cycloalkyl mit 3-24 C-Atomen, das mit Alkylgruppen mit 1-6 C-Atomen substituiert sein kann, wobei R5 und R6 mit Substituenten wie -OR¹, -NR¹₂, -CN, -C(O)NR¹₂, - COOR¹, -C(=O)R¹, -SO₂NR¹₂ oder Aromaten substituiert sein können, die gegebenenfalls mit üblichen Schutzgruppen versehen sind und in dem ein oder mehrere C-Atome durch Heteroatome ersetzt sein können, worin R¹ für H, C₁- bis C₆-Alkyl, C₃- bis C₇-Cycloalkyl, unsubstituiertes oder substituiertes Phenyl steht,
und wobei die Reste X, Y und R4 die Bedeutung wie zuvor definiert haben.

Ein geradkettiges oder verzweigtes Alkyl mit 1-20 C-Atomen ist beispielsweise Methyl, Ethyl, Isopropyl, Propyl, Butyl, sek.-Butyl oder tert.-Butyl, ferner auch Pentyl, 1-, 2- oder 3-Methylbutyl, 1,1-, 1,2- oder 2,2-Dimethylpropyl, 1-Ethylpropyl, Hexyl, Heptyl, 1-Ethyl-pentyl, Octyl, 1-Ethyl-hexyl, Nonyl, Decyl, Undecyl, Dodecyl, Tridecyl, Tetradecyl, Pentadecyl, Hexadecyl, Heptadecyl, Octadecyl, Nonadecyl oder Eicosyl.

Ein geradkettiges oder verzweigtes Alkenyl mit 2 bis 20 C-Atomen, wobei auch mehrere Doppelbindungen vorhanden sein können, ist beispielsweise Allyl, 2- oder 3-Butenyl, Isobutenyl, sek.-Butenyl, ferner 4-Pentenyl, iso-Pentenyl, Hexenyl, Heptenyl, Octenyl, -C₉H₁₇, -C₁₀H₁₉ bis -C₂₀H₃₉; vorzugsweise Allyl, 2- oder 3-Butenyl, Isobutenyl, sek.-Butenyl, ferner bevorzugt ist 4-Pentenyl, iso-Pentenyl oder Hexenyl.

Ein geradkettiges oder verzweigtes Alkinyl mit 2 bis 20 C-Atomen, wobei auch mehrere Dreifachbindungen vorhanden sein können, ist beispielsweise Ethinyl, 1- oder 2-Propinyl, 2- oder 3-Butinyl, ferner 4-Pentinyl, 3-Pentinyl, Hexinyl, Heptinyl, Octinyl, -C₉H₁₅, -C₁₀H₁₇ bis -C₂₀H₃₇, vorzugsweise Ethinyl, 1- oder 2-Propinyl, 2- oder 3-Butinyl, 4-Pentinyl, 3-Pentinyl oder Hexinyl.

Gesättigte oder teilweise oder vollständig ungesättigte Cycloalkylgruppen mit 3-24 C-Atomen sind daher Cyclopropyl, Cyclobutyl, Cyclopentyl, Cyclohexyl, Cycloheptyl, Cyclopentenyl, Cyclohexenyl, Phenyl, Cycloheptenyl, welche mit C₁- bis C₆-Alkylgruppen substituiert sein können.

Unter vollständig ungesättigten Substituenten werden im Sinne der vorliegenden Erfindung auch aromatische Substituenten verstanden. Beispiele hierfür sind Benzyl, Phenyl, Phenylethyl, Phenylpropyl, Phenylbutyl, Phenylpentyl oder Phenylhexyl.

Bevorzugt sind die Reste R4, R5 und R6 unabhängig voneinander ausgewählt aus der Gruppe umfassend Kohlenwasserstoffreste, die gegebenenfalls mit einer oder mehreren OH-Funktionen substituiert sein können, Zuckerreste, Aminosäurereste oder Nukleinsäurereste. Besonders bevorzugt sind die Reste R4, R5 und R6 unabhängig voneinander ausgewählt aus

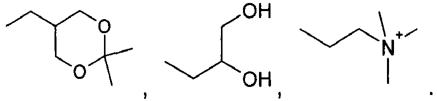

Im ersten Schritt des erfindungsgemäßen Verfahrens wird Phosphoroxychlorid mit einem N-haltigen Heteroaromaten umgesetzt. Die Heteroaromaten können zum Beispiel ausgewählt sein aus der Gruppe umfassend

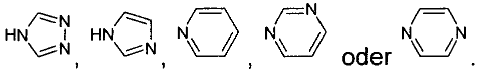

Die Umsetzung im ersten Schritt des erfindungsgemäßen Verfahrens erfolgt bevorzugt in einem aprotischen Lösungsmittel.

Besonders bevorzugt ist ein Lösungsmittel ausgewählt aus der Gruppe umfassend Acetonitril, Essigsäureethylester, Dioxan, Tetrahydrofuran, Tetramethylsilan, Dimethylformamid, Dimethylsulfoxid, Aceton, Diethylether, Methyl-tert-butylether, Cyclohexan, Dimethylacetamid, Sulfolan, N-Methyl-Pyrrolidon oder Dichlormethan.

Ganz besonders bevorzugt handelt es sich bei dem Lösungsmittel um Tetrahydrofuran.

Weiterhin erfolgt die Umsetzung im ersten Schritt des erfindungsgemäßen Verfahrens bevorzugt in Gegenwart einer N-haltigen Base, wie zum Beispiel Ammoniak, primäre, sekundäre oder tertiäre Amine.

Besonders bevorzugt handelt es sich um eine Base ausgewählt aus tertiären Alkylaminen.

Ganz besonders bevorzugt ist die stickstoffhaltige Base Diisopropylethylamin (Hünig-Base) oder Triethylamin.

Insbesondere bevorzugt ist die stickstoffhaltige Base Triethylamin.

Die Umsetzung im ersten Schritt des beschrieben Verfahrens erfolgt bei Raumtemperatur oder unter Kühlung. Vorzugsweise erfolgt die Umsetzung bei T > 0°C. Besonders bevorzugt erfolgt die Reaktion zwischen 10 und 0°C.

In den nachfolgenden Schritten des erfindungsgemäßen Verfahrens können die Heteroaromaten teilweise oder vollständig durch Verbindungen mit OH-Funktionen substituiert werden.

Bevorzugt handelt es sich bei den Verbindungen mit OH-Funktionen um Biomoleküle oder Biomolekülderivate.

Besonders bevorzugt sind Verbindungen ausgewählt aus der Gruppe umfassend Monoalkohole, Diole, Triole, Tetraole, Zucker, Polyole, OH-Gruppen enthaltende Aminosäuren oder OH-Gruppen enthaltende Nukleinsäuren.

Ganz besonders bevorzugt sind Glycerin- oder Cholinderivate, insbesondere Cholintosylat oder Isopropylidenglycerol.

Die Umsetzung mit der OH-Gruppen enthaltenden Verbindung kann bei Raumtemperatur oder erniedrigter Temperatur erfolgen. Vorzugsweise erfolgt die Umsetzung bei T < 0°C, insbesondere bevorzugt bei T < -25°C. Ferner kann bei dem erfindungsgemäßen Verfahren ein letzter Syntheseschritt erfolgen, bei dem eine Verbindung Id hergestellt wird, indem eine Gruppe 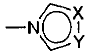 bei pH ≥ 7 hydrolysiert wird.

Die jeweiligen Produkte der einzelnen zuvor beschriebenen Schritte können jeweils als Zwischenprodukte isoliert werden. Alternativ kann die Synthese als Eintopfsynthese erfolgen. Bevorzugt ist ein Verfahren zur Herstellung der Verbindungen nach Formel I in einem Eintopfverfahren.

Besonders bevorzugt ist ein Verfahren wie zuvor beschrieben, dadurch gekennzeichnet, dass es sich bei den N-haltigen Aromaten um 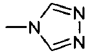 handelt und im ersten Schritt eine Verbindung 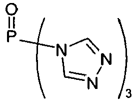 hergestellt wird.

Insbesondere bevorzugt ist ein Verfahren, dadurch gekennzeichnet, dass es sich bei der Verbindung nach Formel I um syn-Glycero-3-phosphocholin handelt.

Mithilfe des erfindungsgemäßen Verfahrens lässt sich somit syn-Glycero-3-phosphocholin herstellen. Dies wird in Schema 1 veranschaulicht:

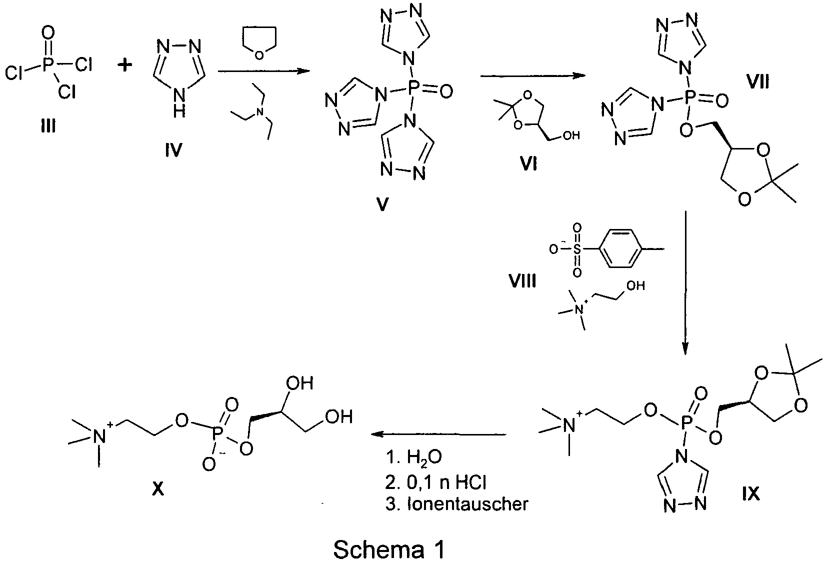

Ausgangspunkt für diese Synthese ist die Umsetzung von Phosphoroxychlorid (III) in Gegenwart von Triethylamin mit Triazol (IV) zu dem Phosphorylierungsreagens (V), das *in situ* mit dem chiralen Synthesebaustein (VI) selektiv zum Monoester (VII) reagiert. Danach wird Cholintosylat (VIII) zugesetzt und es entsteht das Addukt (IX), das anschließend in drei einfachen Schritten zum gewünschten Endprodukt GPC (X) überführt wird.

Die Zwischenprodukte dieser Synthese können jeweils isoliert werden oder alternativ kann die Reaktionsfolge als Eintopfsynthese erfolgen.

Von Vorteil ist dabei, dass es sich bei Reagenz (V) um ein sehr mildes Phosphorylierungsreagens handelt. Verwendet man POCl₃ direkt, so erhält man eine Vielzahl von Abbauprodukten. Der chirale Synthesebaustein (VI) ist sehr säureempfindlich und für eine direkte Umsetzung mit POCl₃ nicht geeignet.

Die Verwendung einer Verbindung der Formel

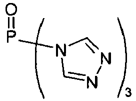

(Reagenz V) als Phosphorylierungsreagens ist daher ebenfalls Gegenstand der vorliegenden Erfindung.

Mithilfe der hier dargestellten Synthese lassen sich außerdem über alle Stufen Ausbeuten von etwa 70 bis über 90 % erreichen.

Ein weiterer Vorteil besteht darin, dass hochreines, kristallines GPC gewonnen werden kann.

Ein weiterer Gegenstand der vorliegenden Erfindung ist eine Verbindung nach Formel I wie zuvor beschrieben, dadurch gekennzeichnet, dass die Verbindung ausgewählt ist aus

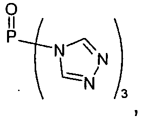

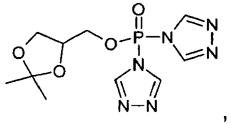

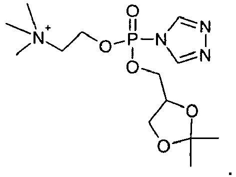

Die erfindungsgemäßen Verbindungen können mithilfe des erfindungsgemäßen Verfahrens hergestellt werden und eignen sich zum Beispiel als wertvolle Zwischenstufen bei der Synthese von pharmazeutischen Wirkstoffen.

Weitere mithilfe des erfindungsgemäßen Verfahrens herstellbare Verbindungen sind beispielsweise die Verbindungen der Formeln (1) bis (5):

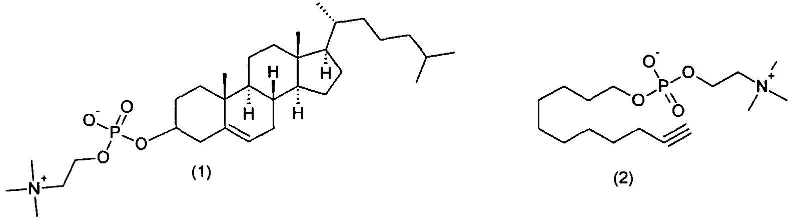

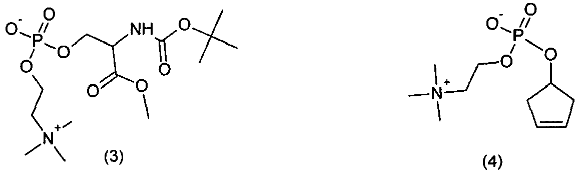

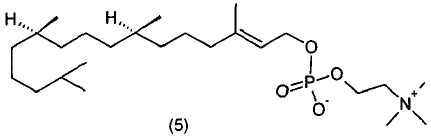

Cholesterylphosphocholin (1) ist eine literaturbekannte Verbindung (Gotoh et al. Chemistry & Biodiversity 2006, 3, 198-209). Die amphiphile Substanz (1) hat offenbar einen starken Einfluss auf die Bildungsdynamik von Liposomen.

Die Verbindungen der Formeln (2) bis (5) können als wertvolle Ausgangsmaterialien bei die Synthese verschiedenster Verbindungen dienen und sind daher ebenfalls Gegenstand der vorliegenden Erfindung.

Die Verbindung der Formel (2) eröffnet beispielsweise mithilfe der von *Sharpless* eingeführten "Click-Chemie" eine gezielte Funktionalisierung des terminalen Alkins.

Das orthogonal geschützte Serin-Derivat der Formel (3) kann beispielsweise direkt durch gezielte Funktionalisierung zu neuartigen Lipiden oder Lipoiden umgesetzt werden.

Verbindungen der Formel (4) ermöglichen die Bereitstellung konformativ eingeschränkter Cyclopentanoid-Analoga von Lipiden. Nach Umwandlung der Verbindung (4) z.B. in ein Diol-Derivat ist so die Herstellung einer Vielzahl neuer Lipid-Verbindungen denkbar.

Das ungesättigte Phythyl-Derivat (5) kann ebenfalls als building-block für eine Vielzahl neuartiger Etherlipide dienen.

Die folgenden Ausführungsbeispiele sollen die Erfindung erläutern, ohne sie zu begrenzen. Die Erfindung ist im gesamten beanspruchten Bereich entsprechend ausführbar. Ausgehend von dem Beispiel lassen sich auch mögliche Varianten ableiten. So sind die Merkmale und Bedingungen der in dem Beispiel beschriebenen Reaktionen auch auf andere, nicht im Detail aufgeführte, aber unter den Schutzbereich der Ansprüche fallende Reaktionen anwendbar.

### Beispiele:

### Beispiel 1: Synthese von Glycero-phosphocholin (GPC)

Ansatz:
25,83g Isopropylidenglycerol
29,94 g Phosphoroxychlorid
59,31 g Triethylamin + 10 g
40,5 g Triazol + 2g
500 ml THF (trocken)
53,79 g Cholintosylat
50 ml H₂O
300 ml 70% Methanol/Wasser
50 ml 0,1 n HCl
900 g Mischbettionentauscher Amberlite hoch rein (Fa. Roth)
400 ml Ethanol (absolut)
1 g (NH₄)₂MoO₄
20 mg Ce(IV)SO₄
10%ige H₂SO₄

In einer 2 I-Glasapparatur werden unter Argon 40,5 g (0,564 mol) Triazol in 400 ml THF vorgelegt, 59,31 g (0,564 mol) Triethylamin zugegeben und 30 min bei 5-10° C gerührt. Dann werden 29,94 g (0,194 mol) Phosphoroxychlorid in 50 ml THF (trocken) über einen Zeitraum von 10 min zugetropft. Die Temperatur sollte während der Zugabe nicht über 10°C steigen. Anschließend wird die Suspension noch 2 h bei 10°C gerührt. Die ausgefallenen Kristalle werden filtriert, das Filtrat auf -10°C abgekühlt und dann 25,83 g (0,195 mol) Isopropylidenglycerin, gelöst in 50 ml THF, über einen Zeitraum von 1 h zugetropft. Die Temperatur wird während der Zugabe unter 0°C gehalten. Danach wird noch 5 h bei 0°C- 10°C gerührt. Anschließend wird 53,79 g gemörsertes und getrocknetes Cholintosylat über einen Zeitraum von 10 min eingetragen und die Suspension noch 24 h bei Raumtemperatur gerührt. Nach Zugabe von 50 ml H₂O rührt man noch 5 h bei Raumtemperatur und lässt den Ansatz über Nacht bei 4°C stehen. Der Niederschlag wird-filtriert und die Lösung im Vakuum auf 20% reduziert. 300 ml 70% Methanol/Wasser werden hinzugefügt und der pH-Wert mit 0,1 n HCl auf 2 eingestellt. Anschließend wird die Lösung über Nacht gerührt. Danach wird die Lösung mit Mischbettionentauscher behandelt (3x300 g) und die Reinigung dünnschichtchromatografisch (Merck Silicagel 60F₂₅₄) kontrolliert (Laufmittel 70% Methanol/Wasser, R_{f}-Wert GPC = 0,25). Sprühreagenz: (NH₄)₂MoO₄ (1g) und Ce(IV)SO₄ (20 mg) werdend in 20 ml 10% H₂SO₄ gelöst. Nach dem Ansprühen der Platten werden sie auf 150-200°C erhitzt. Auf diese Weise werden Phosphorverbindungen blau angefärbt. Nach der Behandlung mit Ionentauscher wird das Gemisch am Rotationsverdampfer eingeengt, bis ein klares, viskoses Öl entsteht. Durch mehrmaliges Einengen mit Ethanol bei 50°C im Rotationsverdampfer entsteht zunächst ein Kristallbrei, der nach Trocknung im Ölpumpenvakuum vollständig auskristallisiert. Ausbeute: 22 g (45 %) streufähige, extrem hygroskopische, farblose Kristalle (X gemäß Schema 1).

¹H- und ³¹P NMR-Spektren: Bruker Avance 500 (DRX) Spektrometer (¹H-Resonanzfrequenz 500 MHz); Lösungsmittel, falls nicht anders angegeben, CDCl₃; Referenzsubstanz ¹H NMR: Tetramethylsilan als innerer Standard, ³¹P NMR: Phosphorsäure in D₂O als externer Standard.

¹H NMR des Produkts Glycero-phosphocholin (X) in DMSO: 5,60 ppm s, 4,93 ppm s, 4,05 ppm s, 3,65-3,71 ppm m, 3,47-3,53 ppm m, 3,13 ppm s.

Tabelle 1 zeigt charakteristische ³¹P NMR-Signale beispielhaft ausgewählter Verbindungen, die nach dem obigen Verfahren hergestellt wurden:

**Tabelle 1: ³¹P NMR-Signale einiger Phosphorsäureester**

| Verbindung (gemäß Schema 1) | ³¹P NMR-Signal (ppm) |
|---|---|
| V | -22,8 |
| VII | -12,2 |
| IX | -6,7 |
| X | 0,04 |

### Beispiel 2: Synthese von Cholesterylphosphocholin

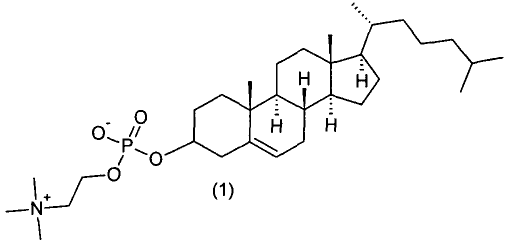

In einer 1 I-Glasapparatur werden unter Argon 3,2 g (0,038 mol) Triazol in 0,2 I Chloroform (trocken) vorgelegt, mit 6 g (0,038 mol) Diisopropyl-ethylamin versetzt und 20 min bei Raumtemperatur gerührt. Danach wird auf 0°C abgekühlt und dann 1,98 g (in 10 ml Chloroform) (0,013 mol) Phosphoroxychlorid über einen Zeitraum von 30 min zugetropft. Die Suspension wird anschließend noch 0,5 h bei 0°C gerührt und dann auf - 40° C abgekühlt. 0,5 g Dimethylaminopyridin und 1,66 g (0,013 mol) Diisopropylethylamin werden hinzugefügt. Danach wird 3,7 g (0.129 mol) Cholintosylat bei -40°C unter starkem Rühren auf einmal in fester Form hinzugefügt.

Anschließend wird die Suspension noch 2 h gerührt. Nach 2 h wird 5,0 g (0,0129 mol) Cholesterin, über einen Zeitraum von 10 min bei -40°C, eingetragen. Danach wird noch 1 h bei - 40°C gerührt.

Dann werden 200 ml H₂O hinzugefügt und das Gemisch auf Raumtemperatur erwärmt. Man addiert 0,5 l Methyl-tert-butylether, um eine Phasentrennung zu erhalten. Man verwirft die organische Phase und schüttelt die wässrige Phase noch 3 x mit Chloroform aus. Danach wird die wässrige Lösung mit 0,2 kg Mischbettionentauscher versetzt und 2 h bei Raumtemperatur gerührt.

Nach der Behandlung mit dem Ionentauscher wird filtriert und der Ionentauscher noch 2 x mit 70% Methanol/Wasser gewaschen. Die vereinigten Lösungen werden am Rotationsverdampfer eingeengt und man erhält einen weißen Feststoff.

Die Ausbeute ergibt 4,6 g (64 %) Cholesterylphosphocholin (1) als streufähiges, mikrokristallines Produkt.

¹H-NMR des Produkts (500 MHz, CDCl₃): δ (ppm) = 5,14 (s, br, 1 H), 4,05 (s, (br), 1 H), 3,70 (m, 1 H), 3,39 (m, 2H), 3,05 (s, 9H), 2,0 (m, 2H), 1,80 (m, 3H), 1,50-0,85 (m, 27H), 0,75 (d, j = 7 Hz, 3H), 0,69 (d, j = 6 Hz, 6H), 0,50 (s, 3H).

### Beispiel 3: Synthese von 2-(trimethylammonio)ethyl undec-10-ynyl phosphate

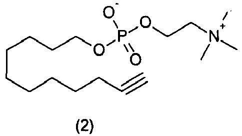

In analoger Weise, wie in Beispiel 2 beschrieben, erhält man 3,8 g 2-(trimethylammonio)ethyl undec-10-ynyl phosphate (2) als amorphes Pulver. Ausbeute: 71 %.

¹H-NMR des Produkts (500 MHz, CDCl₃): δ (ppm) = 4,29 (s, br, 2H), 3,90 (m, 2H), 3,68 (m, 2H), 3,24 (s, 9H), 2,35 (s, 1H), 2,22 (m, 2H), 1,65 (m, 2H), 1,53 (m, 2H), 1,45-1,3 (m, 10H).

### Beispiel 4: Synthese von 2-(tert-butoxycarbonylaminon)-3-methoxy-3-oxopropyl 2-(trimethylammonio)ethyl phosphate

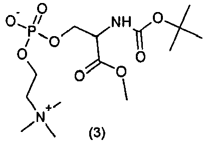

In analoger Weise, wie in Beispiel 2 beschrieben, erhält man 3,8 g 2-(tert-butoxycarbonylaminon)-3-methoxy-3-oxopropyl 2-(trimethylammonio)ethyl phosphate (3) als farbloses Öl. Ausbeute: 81 %.

¹H-NMR des Produkts (500 MHz, CDCl₃) δ (ppm) = 4,49 (s, br, 1 H), 4,28 (m, 3H), 4,15 (m, 1 H), 3,67 (m, 2H), 3,36 (s, 9H), 3,36 (s, 3H), 3,23 (s, 9H), 1,46 (s, 9H.

### Beispiel 5: Synthese von Cyclopent-3-enyl 2-(trimethylammonio)ethyl phosphate

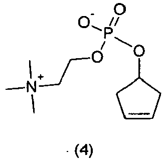

In analoger Weise, wie in Beispiel 2 beschrieben, erhält man 2,6 g Cyclopent-3-enyl 2-(trimethylammonio)ethyl phosphate (4) als farbloses Öl. Ausbeute: 61 %.

¹H-NMR des Produkts (500 MHz, CDCl₃) δ (ppm) = 5,75 (s, 2H), 4,91 (s, 1 H), 4,21 (m, 2H), 3,89 (m, 2H), 3,21 (s, 9H), 2,65 (m, 2H), 2,45 (m, 2H).

### Beispiel 6: Synthese von Phythylphosphocholin

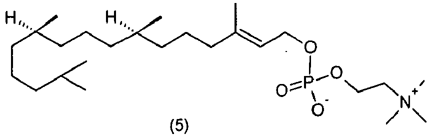

In analoger Weise, wie in Beispiel 2 beschrieben, erhält man 1,8 g Phythylphosphocholin (5) als amorphes Pulver. Ausbeute: 52 %.

¹H-NMR des Produkts (500 MHz, CDCl₃) δ (ppm) = 5,35 (m, 1H), 4,40 (m, 2H), 4,31 (m, 2H), 3,81 (m, 2H), 3,59 (m, 2H), 3,31 (s, 9H), 1,6 (s, 3H), 1,6-0,9 (m, 18H), 0,82 (m, 12H).

## Patentansprüche

1. Verfahren zur Herstellung einer Verbindung der Formel I 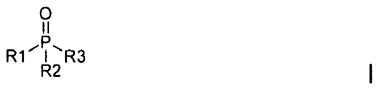 wobei R1, R2, R3 jeweils unabhängig voneinander stehen für
a) Heteroaromaten der Formel II 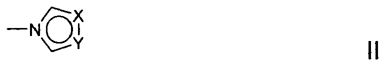 wobei (-X-Y-) stehen für
• -CH-CH-CH-,
• -Z-CH-CH-,
• -CH-Z-CH-,
• -CH-CH-Z-,
• -CH-Z-,
• -Z-CH- oder
• -Z-Z-,
wobei Z jeweils unabhängig voneinander so aus der Gruppe O, S, N, NH ausgewählt werden, dass sich ein aromatisches System ergibt,
b) -OR4, wobei R4 steht für ein geradkettiges oder verzweigtes Alkyl mit 1-20 C-Atomen, ein geradkettiges oder verzweigtes Alkenyl mit 2-20 C-Atomen und einer oder mehreren Doppelbindungen, ein geradkettiges oder verzweigtes Alkinyl mit 2-20 C-Atomen und einer oder mehreren Dreifachbindungen, ein gesättigtes, teilweise oder vollständig ungesättigtes Cycloalkyl mit 3-24 C-Atomen, das mit Alkylgruppen mit 1-6 C-Atomen substituiert sein kann,
wobei R4 mit Substituenten wie -OR¹, -NR¹₂, -CN, -C(O)NR¹₂, -COOR¹, -C(=O)R¹, -SO₂NR¹₂ oder Aromaten substituiert sein kann, die gegebenenfalls mit üblichen Schutzgruppen versehen sind und in dem ein oder mehrere C-Atome durch Heteroatome ersetzt sein können, worin R¹ für H, C₁- bis C₆-Alkyl, C₃- bis C₇-Cycloalkyl, unsubstituiertes oder substituiertes Phenyl steht,
c) -O⁻,
**dadurch gekennzeichnet, dass** in einem ersten Schritt Phosphoroxychlorid mit einem N-haltigen Heteroaromaten umgesetzt wird und in nachfolgenden Schritten die Heteroaromaten gegebenenfalls zumindest teilweise durch Verbindungen mit OH-Funktionen substituiert werden.

2. Verfahren nach Anspruch 1, **dadurch gekennzeichnet, dass** die Verbindung der Formel I ausgewählt ist aus den Formeln la, Ib, Ic, Id und Ie 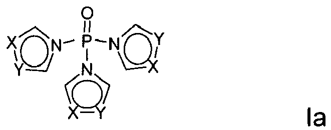 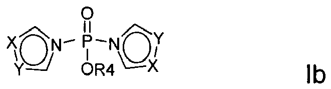 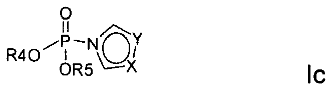 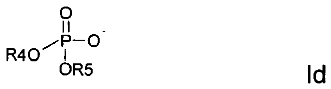 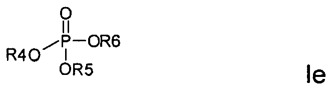 wobei R5 und R6 jeweils unabhängig voneinander und unabhängig von R4 stehen für ein geradkettiges oder verzweigtes Alkyl mit 1-20 C-Atomen, ein geradkettiges oder verzweigtes Alkenyl mit 2-20 C-Atomen und einer oder mehreren Doppelbindungen, ein geradkettiges oder verzweigtes Alkinyl mit 2-20 C-Atomen und einer oder mehreren Dreifachbindungen, ein gesättigtes, teilweise oder vollständig ungesättigtes Cycloalkyl mit 3-24 C-Atomen, das mit Alkylgruppen mit 1-6 C-Atomen substituiert sein kann,
wobei R5 und R6 mit Substituenten wie -OR¹, -NR¹₂, -CN, -C(O)NR¹₂, - COOR¹, -C(=O)R¹, -SO₂NR¹₂ oder Aromaten substituiert sein können, die gegebenenfalls mit üblichen Schutzgruppen versehen sind und in dem ein oder mehrere C-Atome durch Heteroatome ersetzt sein können, worin R¹ für H, C₁- bis C₆-Alkyl, C₃- bis C₇-Cycloalkyl, unsubstituiertes oder substituiertes Phenyl steht,
und wobei die Reste X, Y und R4 die Bedeutung gemäß Anspruch 1 haben.

3. Verfahren nach Anspruch 1 oder 2, **dadurch gekennzeichnet, dass** die Umsetzung im ersten Schritt in einem aprotischen Lösungsmittel, vorzugsweise ausgewählt aus der Gruppe umfassend Acetonitril, Essigsäureethylester, Dioxan, Tetrahydrofuran, Tetramethylsilan, Dimethylformamid, Dimethylsulfoxid, Aceton, Diethylether, Methyl-tert-butylether, Cyclohexan, Dimethylacetamid, Sulfolan, N-Methyl-Pyrrolidon und Dichlormethan erfolgt.

4. Verfahren nach einem oder mehreren der vorstehenden Ansprüche, **dadurch gekennzeichnet, dass** die Umsetzung im ersten Schritt in Gegenwart einer N-haltigen Base, vorzugsweise ausgewählt aus tertiären Alkylaminen erfolgt.

5. Verfahren nach einem oder mehreren der vorstehenden Ansprüche, **dadurch gekennzeichnet, dass** die Umsetzung im ersten Schritt bei Raumtemperatur oder unter Kühlung, vorzugsweise bei T > 0°C erfolgt.

6. Verfahren nach einem oder mehreren der vorstehenden Ansprüche, **dadurch gekennzeichnet, dass** es sich bei den Verbindungen mit OH-Funktionen um Biomoleküle oder Biomolekülderivate handelt, vorzugsweise ausgewählt aus Monoalkoholen, Diolen, Triolen, Tetraolen, Zuckern, Polyolen, OH-Gruppen enthaltenden Aminosäuren oder OH-Gruppen enthaltenden Nukleinsäuren.

7. Verfahren nach einem oder mehreren der vorstehenden Ansprüche **dadurch gekennzeichnet, dass** die Umsetzung mit der OH-Gruppen enthaltenden Verbindung bei Raumtemperatur oder erniedrigter Temperatur, vorzugsweise bei T < 0°C, insbesondere bevorzugt bei T < -25°C erfolgt.

8. Verfahren nach einem oder mehreren der vorstehenden Ansprüche **dadurch gekennzeichnet, dass** eine Verbindung Id hergestellt wird, indem in einem letzten Schritt eine Gruppe 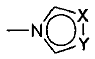 bei pH ≥ 7 hydrolysiert wird.

9. Verfahren nach einem oder mehreren der vorstehenden Ansprüche **dadurch gekennzeichnet, dass** es sich bei den N-haltigen Aromaten um 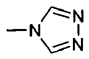 handelt und in dem ersten Schritt eine Verbindung 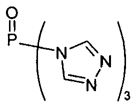 hergestellt wird.

10. Verfahren nach einem oder mehreren der vorstehenden Ansprüche **dadurch gekennzeichnet, dass** es sich bei der Verbindung nach Formel I um Syn-Glycero-3-phosphocholin handelt.

11. Verwendung einer Verbindung der Formel 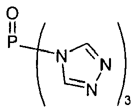 als Phosphorylierungsreagens.

12. Verbindung nach Formel I gemäß Anspruch 1, **dadurch gekennzeichnet, dass** die Verbindung ausgewählt ist aus

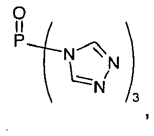

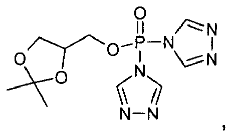

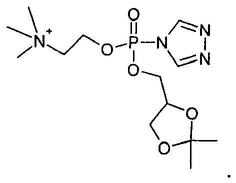

13. Verbindung, ausgewählt aus den Verbindungen der Formel (2), (3), (4) oder (5)

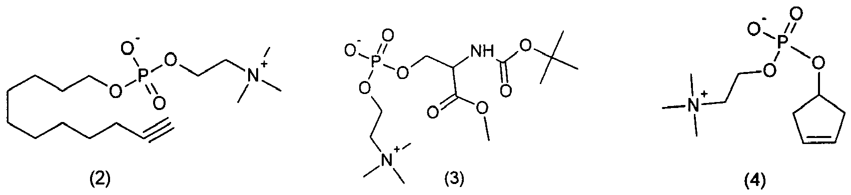

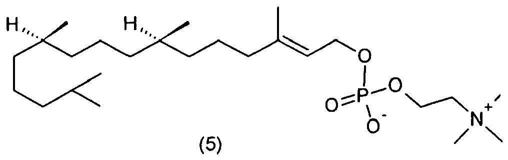

## Claims

1. Process for the preparation of a compound of the formula I 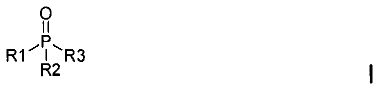 where R1, R2, R3 each stand, independently of one another, for
a) heteroaromatic compounds of the formula II 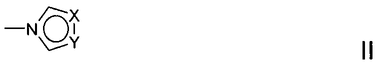 where (-X-Y-) stands for
• -CH-CH-CH-,
• -Z-CH-CH-,
• -CH-Z-CH-,
• -CH-CH-Z-,
• -CH-Z-,
• -Z-CH- or
• -Z-Z-,
where Z is in each case selected, independently of one another, from the group O, S, N, NH so as to give an aromatic system,
b) -OR4, where R4 stands for a straight-chain or branched alkyl having 1-20 C atoms, a straight-chain or branched alkenyl having 2-20 C atoms and one or more double bonds, a straight-chain or branched alkynyl having 2-20 C atoms and one or more triple bonds, a saturated, partially or fully unsaturated cycloalkyl having 3-24 C atoms, which may be substituted by alkyl groups having 1-6 C atoms,
where R4 may be substituted by substituents such as -OR¹, -NR¹₂, -CN, -C(O)NR¹₂, -COOR¹, -C(=O)R¹ -SO₂NR¹₂ or aromatic groups, which are optionally provided with conventional protecting groups and in which one or more C atoms may be replaced by heteroatoms, where R¹ stands for H, C₁- to C₆-alkyl, C₃- to C₇-cycloalkyl, unsubstituted or substituted phenyl,
c) -O⁻,
**characterised in that**, in a first step, phosphorus oxychloride is reacted with an N-containing heteroaromatic compound, and, in subsequent steps, the heteroaromatic compounds are optionally substituted, at least partially, by compounds having OH functions.

2. Process according to Claim 1, **characterised in that** the compound of the formula I is selected from the formulae la, Ib, Ic, Id and Ie 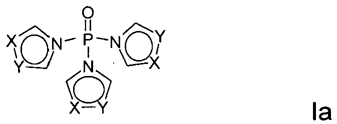 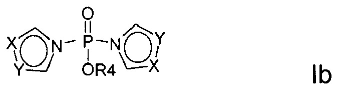 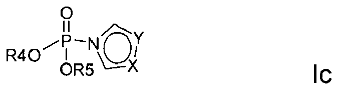 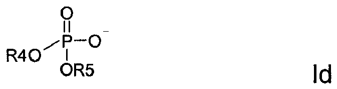 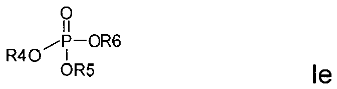 where R5 and R6 each stand, independently of one another and independently of R4, for a straight-chain or branched alkyl having 1-20 C atoms, a straight-chain or branched alkenyl having 2-20 C atoms and one or more double bonds, a straight-chain or branched alkynyl having 2-20 C atoms and one or more triple bonds, a saturated, partially or fully unsaturated cycloalkyl having 3-24 C atoms, which may be substituted by alkyl groups having 1-6 C atoms,
where R5 and R6 may be substituted by substituents such as -OR¹, -NR¹₂, -CN, -C(O)NR¹₂, -COOR¹, -C(=O)R¹ -SO²NR¹₂ or aromatic groups, which are optionally provided with conventional protecting groups and in which one or more C atoms may be replaced by heteroatoms, where R¹ stands for H, C₁- to C₆-alkyl, C₃- to C₇-cycloalkyl, unsubstituted or substituted phenyl,
and where the radicals X, Y and R4 have the meaning according to Claim 1.

3. Process according to Claim 1 or 2, **characterised in that** the reaction in the first step is carried out in an aprotic solvent, preferably selected from the group comprising acetonitrile, ethyl acetate, dioxane, tetrahydrofuran, tetramethylsilane, dimethylformamide, dimethyl sulfoxide, acetone, diethyl ether, methyl tert-butyl ether, cyclohexane, dimethylacetamide, sulfolane, N-methylpyrrolidone and dichloromethane.

4. Process according to one or more of the preceding claims, **characterised in that** the reaction in the first step is carried out in the presence of an N-containing base, preferably selected from tertiary alkylamines.

5. Process according to one or more of the preceding claims, **characterised in that** the reaction in the first step is carried out at room temperature or with cooling, preferably at T > 0°C.

6. Process according to one or more of the preceding claims, **characterised in that** the compounds having OH functions are biomolecules or biomolecule derivatives, preferably selected from monoalcohols, diols, triols, tetraols, sugars, polyols, amino acids containing OH groups or nucleic acids containing OH groups.

7. Process according to one or more of the preceding claims, **characterised in that** the reaction with the compound containing OH groups is carried out at room temperature or reduced temperature, preferably at T < 0°C, particularly preferably at T < -25°C.

8. Process according to one or more of the preceding claims, **characterised in that** a compound Id is prepared by, in a final step, hydrolysing a 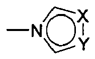 group at pH ≥ 7.

9. Process according to one or more of the preceding claims, **characterised in that** the N-containing aromatic compounds are 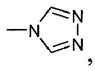 and a compound 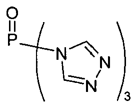 is prepared in the first step.

10. Process according to one or more of the preceding claims, **characterised in that** the compound of the formula I is syn-glycero-3-phosphocholine.

11. Use of a compound of the formula 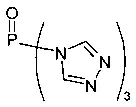 as phosphorylating reagent.

12. Compound of the formula I according to Claim 1, **characterised in that** the compound is selected from

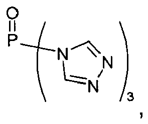

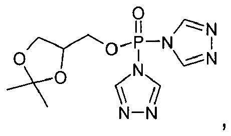

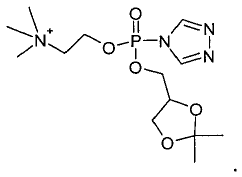

13. Compound selected from the compounds of the formula (2), (3), (4) or (5):

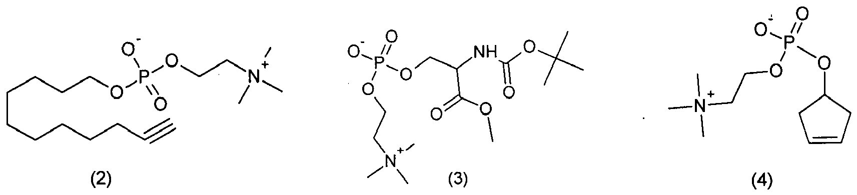

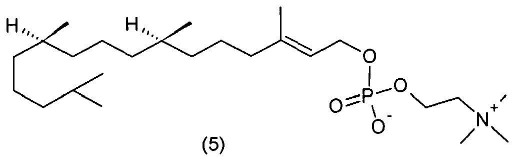

## Revendications

1. Procédé de préparation d'un composé de formule I 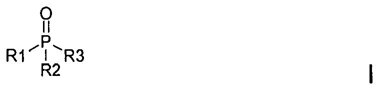 dans laquelle R1, R2, R3 représentent chacun, indépendamment les uns des autres,
a) des composés hétéroaromatiques de formule II 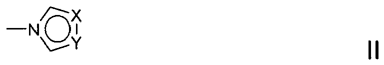 dans laquelle (-X-Y-) représente
• -CH-CH-CH-,
• -Z-CH-CH-,
• -CH-Z-CH-,
• -CH-CH-Z-,
• -CH-Z-,
• -Z-CH- ou
• -Z-Z-,
où Z est dans chaque cas, indépendamment l'un de l'autre, choisi dans le groupe constitué par O, S, N, NH de façon à donner un système aromatique,
b) -OR4, où R4 représente alkyle à chaîne linéaire ou ramifiée ayant 1-20 atomes de C, alcényle à chaîne linéaire ou ramifiée ayant 2-20 atomes de C et une ou plusieurs doubles liaisons, alcynyle à chaîne linéaire ou ramifiée ayant 2-20 atomes de C et une ou plusieurs triples liaisons, cycloalkyle saturé, partiellement ou totalement insaturé ayant 3-24 atomes de C, pouvant être substitué par des groupements alkyle ayant 1-6 atomes de C,
où R4 peut être substitué par des substituants tels que -OR¹, -NR¹₂, -CN, -C(O)NR¹₂, -COOR¹, -C(=O)R¹, -SO₂NR¹₂ ou des groupements aromatiques, qui sont éventuellement pourvus de groupements protecteurs classiques et où un ou plusieurs atomes de C peuvent être remplacés par des hétéroatomes, où R¹ représente H, C₁- à C₆-alkyle, C₃- à C₇-cycloalkyle, phényle substitué ou non substitué,
c) -O⁻,
**caractérisé en ce que**, dans une première étape, de l'oxychlorure de phosphore est réagi avec un composé hétéroaromatique contenant N, et, dans des étapes ultérieures, les composés hétéroaromatiques sont éventuellement substitués, au moins partiellement, par des composés ayant des fonctions OH.

2. Procédé selon la revendication 1, **caractérisé en ce que** le composé de formule I est choisi parmi les formules la, Ib, Ic, Id et le 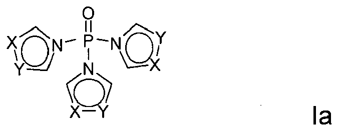 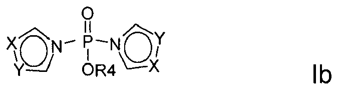 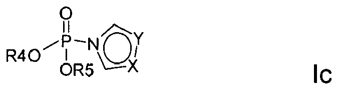 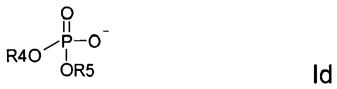 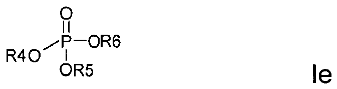 dans lesquelles R5 et R6 représentent chacun, indépendamment l'un de l'autre et indépendamment de R4, alkyle à chaîne linéaire ou ramifiée ayant 1-20 atomes de C, alcényle à chaîne linéaire ou ramifiée ayant 2-20 atomes de C et une ou plusieurs doubles liaisons, alcynyle à chaîne linéaire ou ramifiée ayant 2-20 atomes de C et une ou plusieurs triples liaisons, cycloalkyle saturé, partiellement ou totalement insaturé ayant 3-24 atomes de C, pouvant être substitué par des groupements alkyle ayant 1-6 atomes de C,
où R5 et R6 peuvent être substitués par des substituants tels que -OR¹, -NR¹₂, -CN, -C(O)NR¹₂, -COOR¹, -C(=O)R¹, -SO₂NR¹₂ ou des groupements aromatiques, qui sont éventuellement pourvus de groupements protecteurs classiques et où un ou plusieurs atomes de C peuvent être remplacés par des hétéroatomes, où R¹ représente H, C₁- à C₆-alkyle, C₃- à C₇-cycloalkyle, phényle substitué ou non substitué,
et où les radicaux X, Y et R4 revêtent la signification selon la revendication 1.

3. Procédé selon la revendication 1 ou 2, **caractérisé en ce que** la réaction dans la première étape est effectuée dans un solvant aprotique, choisi de préférence dans le groupe constitué par l'acétonitrile, l'acétate d'éthyle, le dioxane, le tétrahydrofurane, le tétraméthylsilane, le diméthylformamide, le diméthylsulfoxyde, l'acétone, le diéthyléther, le méthyl-tertio-butyléther, le cyclohexane, le diméthylacétamide, le sulfolane, la N-méthylpyrrolidone et le dichlorométhane.

4. Procédé selon l'une ou plusieurs parmi les revendications précédentes, **caractérisé en ce que** la réaction dans la première étape est effectuée en présence d'une base contenant N, choisie de préférence parmi les alkylamines tertiaires.

5. Procédé selon l'une ou plusieurs parmi les revendications précédentes, **caractérisé en ce que** la réaction dans la première étape est effectuée à température ambiante ou sous refroidissement, préférablement à T > 0°C.

6. Procédé selon l'une ou plusieurs parmi les revendications précédentes, **caractérisé en ce que** les composés ayant des fonctions OH sont des biomolécules ou des dérivés de biomolécules, choisis de préférence parmi les mono-alcools, les diols, les triols, les tétraols, les sucres, les polyols, les acides aminés contenant des groupements OH ou les acides nucléiques contenant des groupements OH.

7. Procédé selon l'une ou plusieurs parmi les revendications précédentes, **caractérisé en ce que** la réaction avec le composé contenant des groupements OH est effectuée à température ambiante ou une température réduite, préférablement à T < 0°C, particulièrement préférablement à T < -25°C.

8. Procédé selon l'une ou plusieurs parmi les revendications précédentes, **caractérisé en ce qu'**un composé Id est préparé par, dans une étape finale, l'hydrolyse d'un groupement 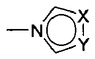 à pH ≥ 7.

9. Procédé selon l'une ou plusieurs parmi les revendications précédentes, **caractérisé en ce que** les composés aromatiques contenant N sont 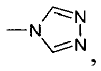 et un composé 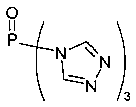 est préparé dans la première étape.

10. Procédé selon l'une ou plusieurs parmi les revendications précédentes, **caractérisé en ce que** le composé de formule I est la syn-glycéro-3-phosphocholine.

11. Utilisation d'un composé de formule 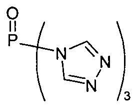 comme réactif de phosphorylation.

12. Composé de formule I selon la revendication 1, **caractérisé en ce que** le composé est choisi parmi

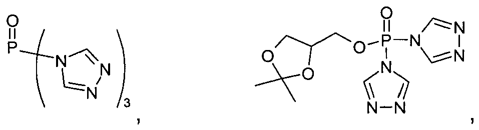

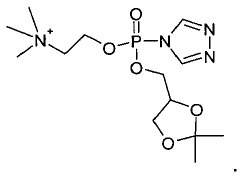

13. Composé choisi parmi les composés de formule (2), (3), (4) ou (5):
